# FASCICULE DE BREVET EUROPEEN

(11) **EP 3 600 918 B1**
(45) Date de publication et mention de la délivrance du brevet: **05.05.2021**
(21) Numéro de dépôt: 18714329.2
(22) Date de dépôt: 19.03.2018
(51) Int. Cl.: B60C 11/00

(54) **PNEUMATIQUE DONT LA BANDE DE ROULEMENT COMPORTE DES RAINURES AVEC FACES LATERALES EN CONTRE-DEPOUILLE ET DES ELEMENTS DE RENFORCEMENT**
REIFEN MIT EINER LAUFFLÄCHE MIT RILLEN MIT HINTERSCHNITTENEN SEITENFLÄCHEN UND VERSTÄRKUNGSELEMENTEN
TYRE COMPRISING A TREAD HAVING GROOVES WITH UNDERCUT SIDE FACES AND REINFORCING ELEMENTS

(30) Priorité: 20.03.2017 FR 1752256
(43) Date de publication de la demande: 05.02.2020
(73) Titulaire: COMPAGNIE GENERALE DES ETABLISSEMENTS MICHELIN, 63000 Clermont-Ferrand (FR)
(72) Inventeur: MORIVAL, Sylvain, 63040 Clermont-Ferrand Cedex 9 (FR); PERRIN, Frédéric, 63040 Clermont-Ferrand Cedex 9 (FR); PALLOT, Patrick, 63040 Clermont-Ferrand Cedex 9 (FR)
(74) Mandataire: Desbordes, Guillaume
(86) Numéro de dépôt international: PCT/FR2018/050656
(87) Numéro de publication internationale: WO 2018/172680

(56) Documents cités:
- WO-A1-2012/069603
- WO-A1-2016/202703
- FR-A1- 3 035 616

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

### État de la technique

De manière connue, la bande de roulement d'un pneumatique est pourvue d'une sculpture comprenant notamment des blocs de sculpture délimités par diverses rainures principales, longitudinales ou circonférentielles, axiales ou encore obliques, les blocs élémentaires pouvant en outre comporter diverses incisions ou lamelles plus fines. Les rainures constituent des canaux destinés à évacuer l'eau lors d'un roulage sur sol mouillé ; les parois de ces rainures définissent également les bords des blocs de sculptures.

Pour améliorer l'adhérence d'un pneumatique, il est intéressant d'utiliser des mélanges caoutchouteux de bande de roulement de basse rigidité, de manière à améliorer le taux de contact entre le mélange caoutchouteux et la chaussée. Ce type de conception s'applique très classiquement aux pneumatiques de compétition, lesquels ont de faibles hauteurs de sculpture et un volume de mélange caoutchouteux à user très réduit. Mais pour des pneumatiques pour véhicules tourisme, la hauteur de sculpture doit être suffisante pour garantir un kilométrage satisfaisant d'une part et la sculpture doit comporter des rainures en suffisance pour évacuer l'eau en cas de roulage sur sol mouillé. Il s'est toujours avéré difficile d'utiliser des mélanges caoutchouteux de basse rigidité pour des pneumatiques pour véhicules tourisme. En effet, la présence d'une sculpture, c'est-à-dire de rainures de conception adéquate pour permettre un roulage sur sol mouillé dans de bonnes conditions de sécurité, rend la bande de roulement très souple, ce qui dégrade la tenue de route du véhicule en virage car le pneumatique ne développe pas une poussée suffisante dans la direction axiale lors de braquages.

Pour apporter une amélioration de performances globales en cas d'utilisation de mélanges caoutchouteux de bande de roulement de basse rigidité, les documents FR3035616 et WO2016/174100 proposent d'utiliser un mélange caoutchouteux de bande de roulement de faible dureté et de renforcer la bande de roulement en y incluant un ou plusieurs renforcement circonférentiels ayant une forme triangulaire, vue en coupe méridienne, ledit triangle ayant sa pointe orientée radialement vers l'extérieur. Le document WO2016/202703 propose de renforcer la rigidité du sommet en ajoutant une couche de mélange caoutchouteux de module MA10 supérieur à 10 MPA.

Dans un autre contexte, le document WO2015/036175 propose une sculpture pour la bande de roulement d'un pneumatique dont certains sillons sont conformés en contre-dépouille, c'est-à-dire présentent une largeur axiale augmentant lorsque l'on se déplace radialement vers l'intérieur ; l'objectif de telles sculptures est de maintenir, lors de l'usure du pneumatiques, une excellente capacité de la sculpture à évacuer l'eau dans l'aire de contact du pneu sur la route lors de roulage sur route détrempée. Malheureusement, ce type de sculpture engendre une perte de rigidité de dérive et de rigidité latérale. Le document WO 2012/069603 divulgue un pneumatique avec, entre la bande de roulement et l'armature de sommet, une couche de mélange caoutchouteux de faible hystérésis. Cette couche a un volume supérieur du côté intérieur du pneumatique relativement au côté extérieur.

### Description brève de l'invention

L'invention a pour objet un pneumatique comprenant une bande de roulement ayant une surface de contact destinée à venir en contact avec la chaussée pendant le roulage du pneumatique, ladite bande de roulement comprenant au moins un élément de renforcement circonférentiel dont une partie au moins de la section méridienne a une forme de triangle dont la pointe est orientée radialement vers l'extérieur, ledit élément de renforcement circonférentiel étant constitué d'un mélange caoutchouteux de module dynamique de cisaillement G* supérieur au module dynamique de cisaillement G* du mélange caoutchouteux majoritaire de la bande de roulement, ladite bande de roulement comprenant au moins deux rainures s'étendant au moins en partie circonférentiellement, chaque rainure circonférentielle étant délimitée par un fond de rainure et par deux faces latérales axialement, ladite bande de roulement comprenant au moins un bloc de sculpture formé entre deux rainures, ledit bloc présentant une largeur axiale mesurée à un niveau radial correspondant sensiblement au fond de rainure, caractérisé en ce que :
- au moins l'une des faces latérales est en contre-dépouille,
- l'élément de renforcement circonférentiel est disposé axialement par rapport à ladite face latérale en contre-dépouille à une distance « d » comprise entre 0 et 15 % de la largeur axiale du bloc de sculpture, au moins en allant radialement de l'intérieur vers l'extérieur depuis un niveau radial situé au-dessus du niveau limite d'usure et jusqu'à une hauteur radiale valant 5 % de l'épaisseur « p » de la bande de roulement.

Lorsque l'on utilise des rainures présentant des contre-dépouilles, avec l'avantage connu en soi de mieux maintenir la capacité de drainer l'eau malgré l'usure du pneumatique, il est connu que cela présente l'inconvénient d'engendrer une baisse de rigidité transversale de la bande de roulement, donc des performances non optimales en matière de comportement dynamique du pneumatique. Un avantage de l'invention est qu'elle permet de très bien compenser la baisse de rigidité due à la ou aux contre-dépouilles, permettant d'offrir des performances à la fois améliorées et bien plus durable dans le temps, c'est-à-dire au cours de l'usure du pneumatique. De préférence, afin de suffisamment renforcer la rigidité axiale du pneumatique, l'élément de renforcement circonférentiel est constitué d'un mélange caoutchouteux de module dynamique de cisaillement G* au moins deux fois supérieur au module dynamique de cisaillement G* du mélange caoutchouteux majoritaire de la bande de roulement.

De façon avantageuse, l'enseignement de l'invention est appliqué à un pneumatique dans lequel les deux faces latérales de l'ensemble des rainures sont en contre-dépouille. De préférence, l'élément de renforcement circonférentiel forme ladite face latérale axialement en contre-dépouille. Dans un mode préféré de réalisation de l'invention, le pneumatique comporte un élément de renforcement circonférentiel de part et d'autre d'au moins une rainure. Dans ce dernier cas, il apparait intéressant que lesdits éléments de renforcement soient reliés axialement par une languette formée du même mélange de caoutchouc que le mélange de caoutchouc formant lesdits éléments de renforcement circonférentiel. Notons encore que, dans un mode particulier de réalisation de l'invention, lorsque le pneumatique est neuf, l'élément de renforcement circonférentiel affleure à la face de contact de la bande de roulement destinée à venir en contact avec la chaussée pendant le roulage du pneumatique. Cependant, dans le cas où un élément de renforcement forme une face latérale en contre-dépouille, il est avantageux que, lorsque le pneumatique est neuf, l'élément de renforcement circonférentiel n'affleure pas à la face de contact de la bande de roulement destinée à venir en contact avec la chaussée pendant le roulage du pneumatique.

De préférence, le mélange caoutchouteux constitutif du mélange caoutchouteux de l'élément de renforcement a un module dynamique de cisaillement G* (mesuré à 60°C à 10 Hz et sous une contrainte de cisaillement alterné de 0,7 MPa) supérieur à 5 MPa et préférentiellement supérieur à 10 MPa.

L'invention concerne plus particulièrement les pneumatiques destinés à équiper des véhicules à moteur de type tourisme, de type SUV (abréviation de « Sport Utility Vehicle »), de type deux roues (notamment motos), de type avion, ou encore des véhicules industriels choisis parmi camionnettes, les poids-lourd (c'est-à-dire métro, bus, engins de transport routier comme des camions, des tracteurs et leurs remorques), des véhicules « hors-la-route » tels qu'engins agricoles ou de génie civil, ou encore des engins de manutention.

### Description des Figures

Les objets de l'invention sont maintenant décrits à l'aide du dessin annexé dans lequel :
- la figure 1 représente de manière très schématique, une coupe méridienne d'un pneumatique conforme à un premier mode de réalisation de l'invention ;
- la figure 2 représente de manière très schématique, une coupe méridienne d'un pneumatique conforme à un deuxième mode de réalisation de l'invention ;
- la figure 3 représente de manière très schématique, une coupe méridienne d'un pneumatique conforme à un troisième mode de réalisation de l'invention ;
- la figure 4 représente de manière très schématique, une coupe méridienne d'un pneumatique conforme à un quatrième mode de réalisation de l'invention ;
- la figure 5 représente de manière très schématique, une coupe méridienne d'un pneumatique conforme à un cinquième mode de réalisation de l'invention ;
- la figure 6 représente de manière très schématique, une coupe méridienne d'un pneumatique conforme à un sixième mode de réalisation de l'invention ;
- la figure 7 représente de manière très schématique, une coupe méridienne d'un pneumatique conforme à un septième mode de réalisation de l'invention ;
- la figure 8 représente de manière très schématique, une coupe méridienne d'un pneumatique conforme à un huitième mode de réalisation de l'invention ;
- la figure 9 représente de manière très schématique, une coupe méridienne d'un pneumatique conforme à un neuvième mode de réalisation de l'invention ;
- la figure 10 représente de manière très schématique, une coupe méridienne d'un pneumatique conforme à un dixième mode de réalisation de l'invention ;
- la figure 11 représente de manière très schématique, une coupe méridienne d'un pneumatique conforme à un onzième mode de réalisation de l'invention ;
- la figure 12 représente de manière très schématique, une coupe méridienne d'un pneumatique conforme à un douzième mode de réalisation de l'invention ;
- la figure 13 représente de manière très schématique, une coupe méridienne d'un pneumatique conforme à un treizième mode de réalisation de l'invention ;
- la figure 14 représente de manière très schématique, une coupe méridienne d'un pneumatique conforme à un quatorzième mode de réalisation de l'invention ; et
- la figure 15 montre de façon très schématique des variations de forme d'un élément de renforcement, partie de l'invention.

### Description détaillée de l'invention

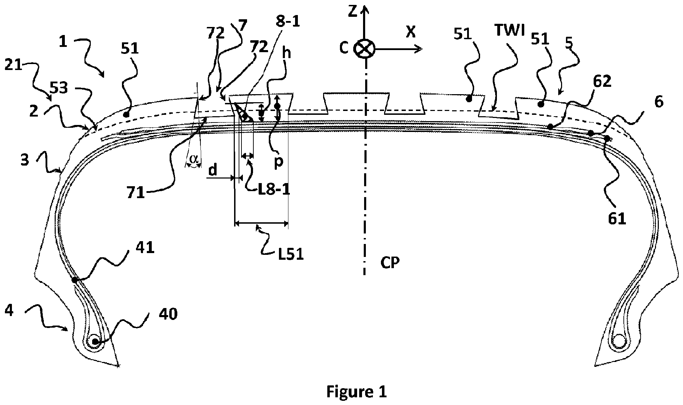

On voit à la figure 1 un pneumatique 1 comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 montre un plan équatorial CP, plan perpendiculaire à l'axe de rotation du pneumatique, situé à mi-distance des deux bourrelets 4 (montés sur jante) et passant par le milieu de l'armature de ceinture ; la figure 1 indique aussi, par des flèches disposées juste au-dessus de la bande de roulement 5, sur le plan équatorial CP, les directions axiale X, circonférentielle C et radiale Z.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en œuvre, il s'agit de câbles textiles ; ces câbles sont disposés sensiblement parallèlement les uns aux autres et s'étendant d'un bourrelet à l'autre de façon telle qu'ils forment un angle compris entre 80° et 90° avec le plan équatorial CP.

La bande de roulement 5 comprend une pluralité de blocs de sculpture 51. Deux blocs de sculpture sont séparés axialement par une rainure 7 s'étendant au moins en partie circonférentiellement, chaque rainure circonférentielle 7 étant délimitée, radialement vers l'intérieur, par un fond 71 de rainure, et axialement, par deux faces latérales 72. Au moins certains desdits blocs de sculpture 51 comportent au moins un élément de renforcement circonférentiel, désigné en général par la référence « 8 », suivie d'un suffixe, pour identifier des modes de réalisation différents ; ainsi, à la figure 1, on voir un élément de renforcement circonférentiel 8-1. A cette figure 1, il y a un seul élément de renforcement circonférentiel 8-1 dans un seul bloc de sculpture 51.

Les deux faces latérales 72 de chacune des rainures 7 sont en contre-dépouille. Précisons ce que l'on appelle « contre-dépouille » dans le contexte de la présente invention. Soit α l'angle que forme par rapport à la direction perpendiculaire à la surface de roulement la face latérale d'une rainure orientée essentiellement circonférentiellement. Une face latérale est dite en contre dépouille lorsque l'angle α est tel que, en cheminant radialement le long de la direction perpendiculaire à la surface de roulement, depuis l'extérieur vers l'intérieur (c'est-à-dire vers l'axe de rotation du pneumatique), ladite face latérale s'écarte de ladite direction perpendiculaire du côté axialement opposé à la rainure (c'est-à-dire que l'on ne coupe jamais le mélange de caoutchouc de la bande de roulement).

Le sommet 2 comporte une armature de sommet 6 comportant deux nappes de ceinture 61, 62 ; la nappe de carcasse 41 est également présente dans le sommet. De façon très classique, les nappes de ceinture 61, 62 sont formés par des câbles métalliques arrangés parallèlement entre eux. De façon bien connue, les éléments de renforcement que forment les câbles de la nappe de carcasse 41 et les câbles des nappes de ceinture 61, 62 sont orientés selon au moins trois directions différentes de façon à former une triangulation.

Par convention, on mesure la largeur axiale L51 du bloc de sculpture 51 au niveau radial correspondant au fond 71 de rainure 7. La limite d'usure est repérée par le trait discontinu TWI. Par convention, on prend pour référence l'épaisseur « p » de la bande de roulement, mesurée à l'état neuf du pneumatique, entre la surface de contact destinée à venir en contact avec la chaussée pendant le roulage du pneumatique et le bord radialement extérieur de la nappe de ceinture 62 radialement la plus à l'extérieur. De façon avantageuse, le module dynamique de cisaillement G* du mélange de caoutchouc apparaissant en surface du fond 71 de rainure 7 est identique au module dynamique de cisaillement G* du mélange caoutchouteux majoritaire de la bande de roulement. L'élément de renforcement circonférentiel 8-1 est disposé axialement par rapport à ladite face latérale 72 en contre-dépouille à une distance « d » valant environ 10 % de la largeur axiale L51 du bloc de sculpture 51. Cette distance « d » est sensiblement constante en allant radialement de l'intérieur vers l'extérieur sur toute la hauteur radiale « h » de l'élément de renforcement circonférentiel 8-1. Cette hauteur radiale « h » de l'élément de renforcement circonférentiel 8-1 atteint environ 75 % de l'épaisseur « p » de la bande de roulement. L'élément de renforcement circonférentiel 8-1 n'affleure pas à la face de contact de la bande de roulement destinée à venir en contact avec la chaussée pendant le roulage du pneumatique. Notons encore que, à sa base, la largeur axiale L8-1 de l'élément de renforcement circonférentiel 8-1 vaut environ 20% de la largeur axiale L51 du bloc de sculpture 51.

Le lecteur se reportera au tableau 1 (paragraphe 77) de la demande de brevet WO2016/174100 précitée pour prendre connaissance d'une composition de caoutchouc citée pour l'élément de renforcement, ayant un module dynamique de cisaillement G* (mesuré à 60°C à 10 Hz et sous une contrainte de cisaillement alterné de 0,7 MPa) valant 30,3 MPa. Il n'y a aucune restriction ou limitation quant au matériau majoritaire pour la bande de roulement, la présente invention étant compatible avec toute valeur de rigidité et/ou de facteur de perte. Dans une mise en œuvre particulière et non limitative, l'invention peut être utilisée avec un matériau majoritaire pour la bande de roulement d'une composition de caoutchouc de très faible rigidité afin d'atteindre de très hauts niveaux d'adhérence, pour des applications à des véhicules de sport. Le lecteur se reportera au tableau 2 (paragraphe 88) de la demande de brevet WO2016/174100 précitée pour prendre connaissance d'une composition de caoutchouc citée pour le matériau majoritaire pour la bande de roulement, ayant un module dynamique de cisaillement G* valant 0,9 MPa.

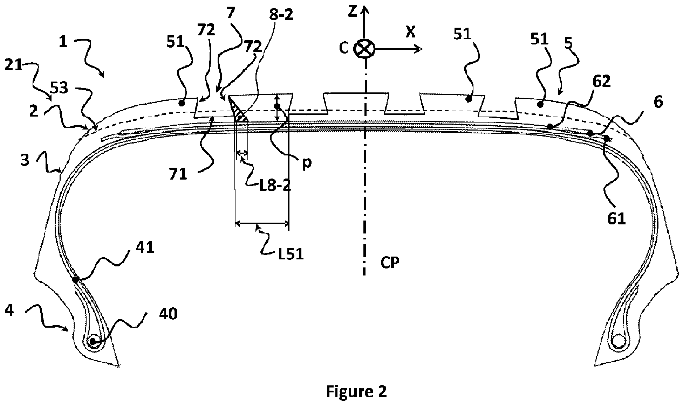

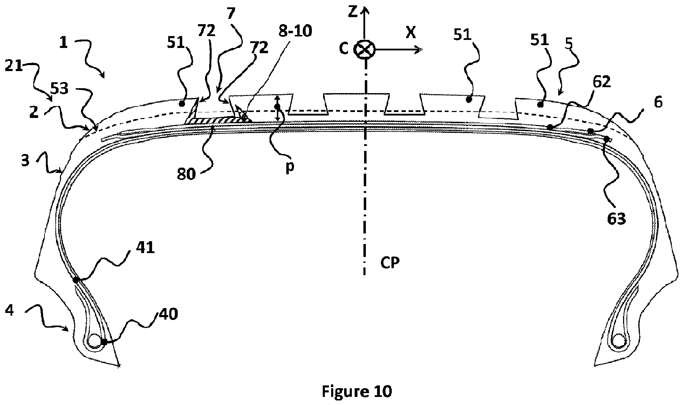

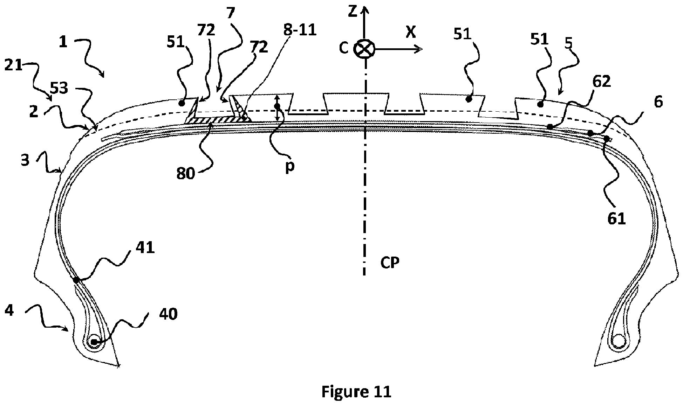

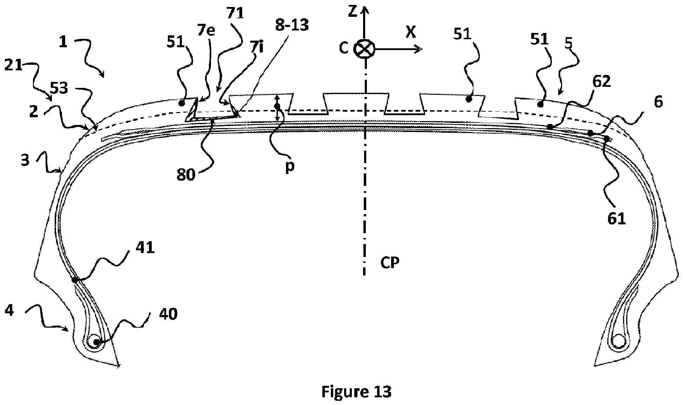

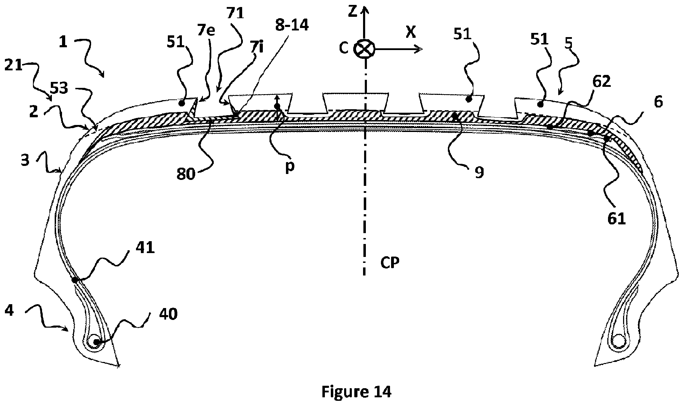

La suite de la description illustre des variantes de réalisation de l'invention en s'appuyant sur les figures 2 à 14. Aux figures, tous les éléments communs portent les mêmes références ; dans la suite de la description, on ne décrit que ce qui est spécifique de l'exemple illustré, sans reprendre dans la description des figures successives des aspects déjà exposés.

A la figure 2, on voit que d'une part l'élément de renforcement circonférentiel 8-2 affleure à la face de contact de la bande de roulement destinée à venir en contact avec la chaussée pendant le roulage du pneumatique, et que d'autre part l'élément de renforcement circonférentiel 8-2 forme l'une des faces latérales 72 d'une rainure circonférentielle 7. Ces deux aspects peuvent être utilisés indépendamment l'un de l'autre. Dans cet exemple, la distance « d » est nulle et la hauteur radiale « h » de l'élément de renforcement circonférentiel 8-2 est identique à l'épaisseur « p » de la bande de roulement. A sa base, la largeur axiale L8-2 de l'élément de renforcement circonférentiel 8-2 vaut environ 25% de la largeur axiale L51 du bloc de sculpture.

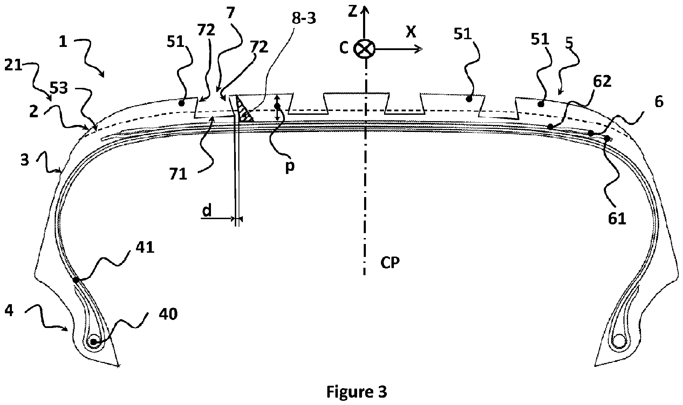

A la figure 3, l'élément de renforcement circonférentiel 8-3 n'est pas positionné au bord d'un bloc de sculpture 51 ; la distance « d » vaut environ 5% de la largeur axiale L51 du bloc de sculpture ; lorsque la distance « d » est non nulle, une valeur maximale de ladite distance « d » est de préférence de l'ordre de 2 mm.

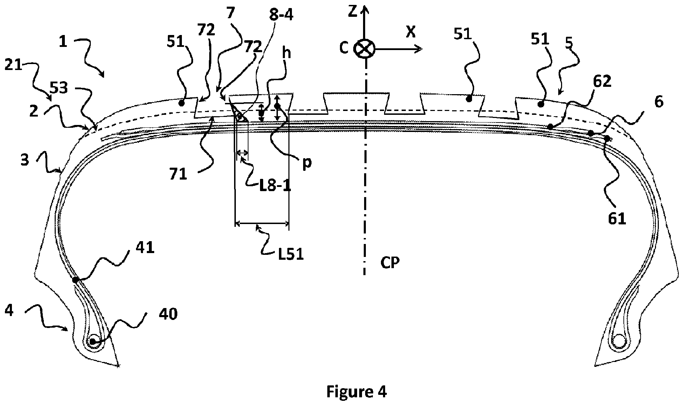

A la figure 4, on voit que l'élément de renforcement circonférentiel 8-4 n'affleure pas à la face de contact de la bande de roulement destinée à venir en contact avec la chaussée pendant le roulage du pneumatique, et on voit que l'élément de renforcement circonférentiel 8-4 forme l'une des faces latérales 72 d'une rainure circonférentielle 7.

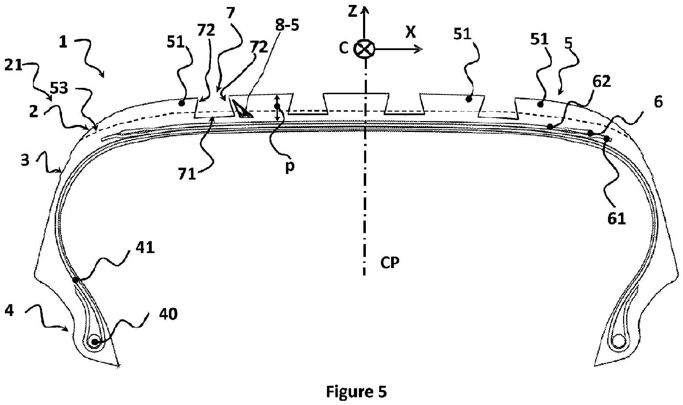

A la figure 5, on voit que l'élément de renforcement circonférentiel 8-5 repose radialement sur le matériau majoritaire pour la bande de roulement et est espacé radialement de l'armature sommet 6. La distance entre l'armature sommet et le renfort étant de préférence inférieure à 2mm, avantageusement inférieure à 1mm.

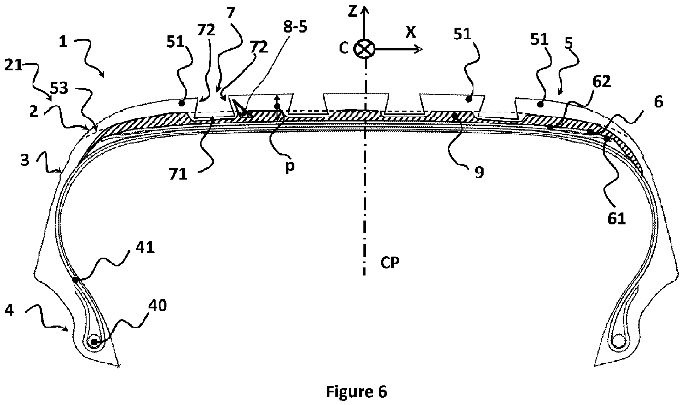

A la figure 6, on voit que l'élément de renforcement circonférentiel 8 repose sur une sous-couche 9. La distance entre l'armature sommet et le renfort est de préférence inférieure à 2 mm, avantageusement inférieure à 1 mm, alors que la sous-couche 9 s'étend radialement jusqu'au niveau de la limite d'usure de la bande de roulement.

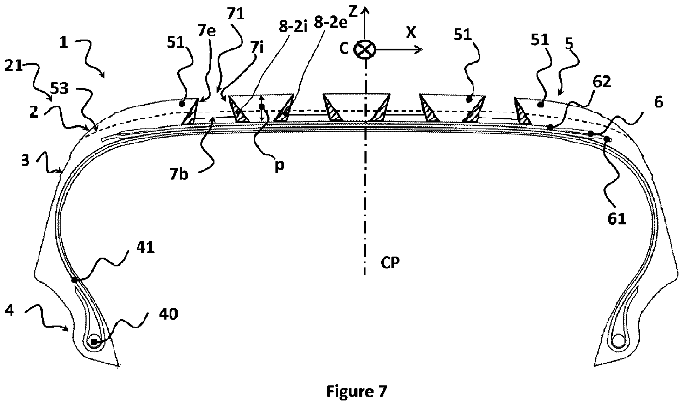

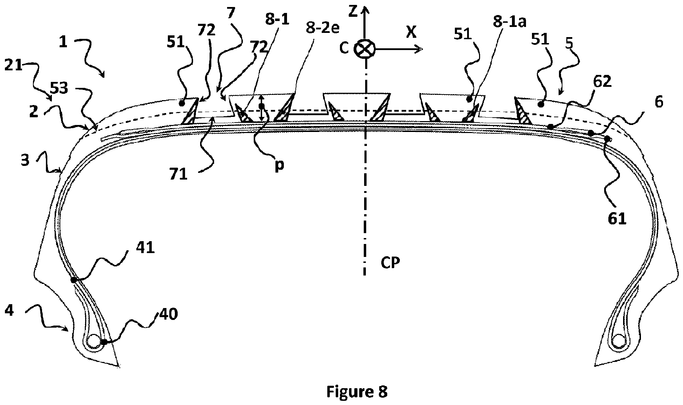

Avantageusement, l'ensemble des blocs 51 est pourvu d'au moins un élément de renforcement circonférentiel 8-x. C'est ce que l'on voit dans les modes de réalisation illustrés aux figures 7 et 8. A la figure 7, on voit que, tout comme illustré à la figure 2, l'élément de renforcement circonférentiel 8-2i affleure à la face de contact de la bande de roulement destinée à venir en contact avec la chaussée pendant le roulage du pneumatique et forme l'une des faces latérales 7i d'une rainure circonférentielle 7. L'élément de renforcement circonférentiel 8-2e présente une symétrie miroir par rapport à l'élément de renforcement circonférentiel 8-2i ; il affleure à la face de contact de la bande de roulement destinée à venir en contact avec la chaussée pendant le roulage du pneumatique et forme l'autre 7e des faces latérales d'une rainure circonférentielle 7. L'ensemble des rainures 7 sont bordées de tels éléments de renforcement circonférentiel 8-2i et 8-2e.

A la figure 8, chaque rainure 7 est bordée d'une part d'un élément de renforcement circonférentiel 8-2e similaire à ce qui est illustré à la figure 7, donc affleurant à la face de contact de la bande de roulement destinée à venir en contact avec la chaussée pendant le roulage du pneumatique et formant l'une des faces latérales 7e d'une rainure circonférentielle 7. Du côté axialement opposé de chaque rainure, est disposé un élément de renforcement circonférentiel 8-1 de la configuration et de la disposition illustré à la figure 1, c'est-à-dire à une distance « d » non nulle de la rainure, et de hauteur radiale inférieure à la profondeur de la bande de roulement.

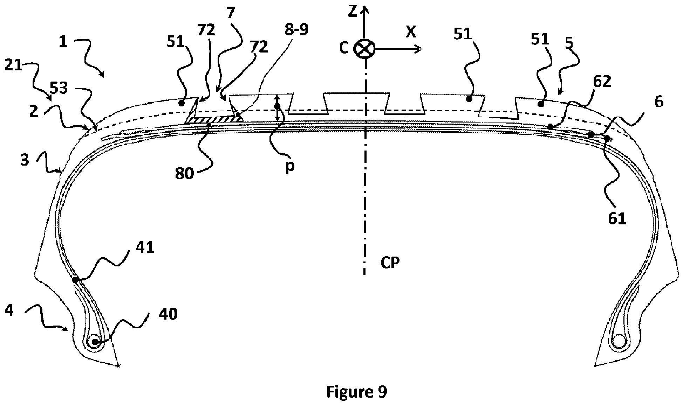

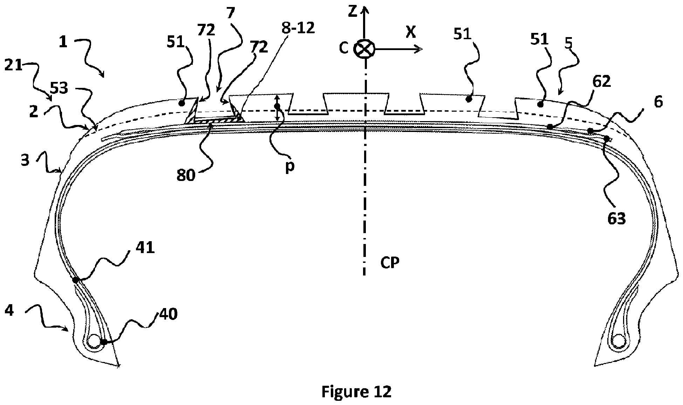

Les figures 9 à 14 donnent des exemples d'éléments de renforcement répartis de part et d'autre d'une rainure, sous différentes formes et positionnements déjà expliqués ; l'aspect commun à l'ensemble de ces modes de réalisation est que les éléments de renforcement circonférentiel 8-9, 8-10, 8-11, 8-12, 8-13, 8-14 répartis de part et d'autre d'une rainure sont reliés axialement par une languette 80 formée du même mélange de caoutchouc que le mélange de caoutchouc formant lesdits éléments de renforcement circonférentiel. Ces éléments de renforcement circonférentiel tantôt affleurant au fond de rainure (figures 9 à 11), tantôt n'affleurant pas au fond de rainure (figures 12 à 14).

Notons encore que l'invention trouve à s'appliquer aussi bien aux pneumatiques gonflés que aux ensembles non pneumatiques et que de nombreux panachages de forme et de disposition d'éléments de renforcement sont possibles, sans sortir du cadre de la présente invention.

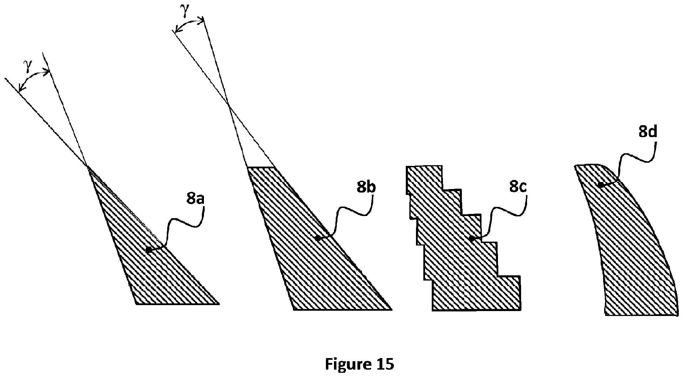

Si l'allure générale de l'élément de renforcement a une forme de triangle, vu en section méridienne, il faut comprendre donc qu'une pluralité de géométries (vues en section méridienne) répond aux exigences de la présente invention. C'est ce que la figure 15 illustre. La forme des éléments de renforcement circonférentiel présentés est triangulaire (voir 8a), mais cette forme peut varier (8b) et l'une ou l'autre des parois latérales peuvent être concaves (voir 8d), convexes (voir 8d) ou en escaliers (voir 8c), notamment, sans sortir du cadre de cet invention. L'essentiel est que la largeur de l'élément de renforcement, mesurée axialement, se réduise progressivement en parcourant l'élément de renforcement radialement depuis l'intérieur vers l'extérieur, sans variation trop abrupte. La forme de l'élément de renforcement circonférentiel est de section effilée radialement vers l'extérieur. Cela renforce son efficacité. Les parois de cet élément de renforcement circonférentiel peuvent être concaves, convexes ou en escalier. De préférence, l'angle γ que forment les deux parois latérales du ou des éléments de renforcement circonférentiels est supérieur à 35°. En dessous de 35°, les observations du déposant montrent que l'efficacité est réduite.

## Revendications

1. Pneumatique (1) comprenant une bande de roulement (5) ayant une surface de contact destinée à venir en contact avec la chaussée pendant le roulage du pneumatique, ladite bande de roulement comprenant au moins un élément de renforcement circonférentiel (8-x) dont une partie au moins de la section méridienne a une forme de triangle dont la pointe est orientée radialement vers l'extérieur, ledit élément de renforcement circonférentiel (8-x) étant constitué d'un mélange caoutchouteux de module dynamique de cisaillement G* mesuré à 60°C à 10 Hz et sous une contrainte de cisaillement alterné de 0,7 MPa supérieur au module dynamique de cisaillement G* du mélange caoutchouteux majoritaire de la bande de roulement, ladite bande de roulement comprenant au moins deux rainures (7) s'étendant au moins en partie circonférentiellement, chaque rainure circonférentielle (7) étant délimitée par un fond (71) de rainure et par deux faces latérales (72) axialement, ladite bande de roulement comprenant au moins un bloc (51) de sculpture formé entre deux rainures (7), ledit bloc présentant une largeur axiale L51 mesurée à un niveau radial correspondant sensiblement au fond (71) de rainure, **caractérisé en ce que** :
- au moins l'une des faces latérales (72) est en contre-dépouille,
- l'élément de renforcement circonférentiel (8-x) est disposé axialement par rapport à ladite face latérale (72) en contre-dépouille à une distance « d » comprise entre 0 et 15 % de la largeur axiale L51 du bloc de sculpture (51), au moins en allant radialement de l'intérieur vers l'extérieur depuis un niveau radial situé au-dessus du niveau limite d'usure et jusqu'à une hauteur radiale valant 5 % de l'épaisseur « p » de la bande de roulement.

2. Pneumatique selon la revendication 1, dans lequel l'élément de renforcement circonférentiel (8-x) étant constitué d'un mélange caoutchouteux de module dynamique de cisaillement G* au moins deux fois supérieur au module dynamique de cisaillement G* du mélange caoutchouteux majoritaire de la bande de roulement.

3. Pneumatique selon l'une quelconque des revendications 1 ou 2, dans lequel l'élément de renforcement circonférentiel (8-x) forme ladite face latérale axialement (72) en contre-dépouille.

4. Pneumatique selon l'une quelconque des revendications 1 à 3, dans lequel le mélange caoutchouteux constitutif de l'élément de renforcement (8-x) a un module dynamique de cisaillement G* supérieur à 5 MPa.

5. Pneumatique selon la revendication 4, dans lequel le mélange caoutchouteux constitutif de l'élément de renforcement (8-x) a un module dynamique de cisaillement G* supérieur à 10 MPa.

6. Pneumatique (1) selon l'une des revendications 1 à 5, dans lequel le module dynamique de cisaillement G* du mélange de caoutchouc apparaissant en surface du fond (71) est identique au module dynamique de cisaillement G* du mélange caoutchouteux majoritaire de la bande de roulement.

7. Pneumatique selon l'une quelconque des revendications précédentes, dans lequel l'élément de renforcement circonférentiel (8) affleure à la face de contact de la bande de roulement destinée à venir en contact avec la chaussée pendant le roulage du pneumatique.

8. Pneumatique selon l'une quelconque des revendications précédentes, comportant un élément de renforcement circonférentiel (8) de part et d'autre d'au moins une rainure (7).

9. Pneumatique selon la revendication 8, dans lequel lesdits éléments de renforcement (8-9, 8-10, 8-11, 8-12, 8-13, 8-14) sont reliés axialement par une languette (80) formée du même mélange de caoutchouc que le mélange de caoutchouc formant lesdits éléments de renforcement circonférentiel.

## Patentansprüche

1. Reifen (1), welcher einen Laufstreifen (5) umfasst, der eine Kontaktfläche aufweist, die dazu bestimmt ist, während des Rollens des Reifens mit der Fahrbahn in Kontakt zu kommen, wobei der Laufstreifen wenigstens ein umlaufendes Verstärkungselement (8-x) umfasst, bei dem wenigstens ein Teil seines Meridianschnittes eine Form eines Dreiecks aufweist, dessen Spitze radial nach außen gerichtet ist, wobei das umlaufende Verstärkungselement (8-x) aus einer Kautschukmischung mit einem dynamischen Schermodul G*, gemessen bei 60 °C, bei 10 Hz und unter einer wechselnden Scherbeanspruchung von 0,7 MPa, besteht, der größer als der dynamische Schermodul G* der im überwiegenden Anteil vorhandenen Kautschukmischung des Laufstreifens ist, wobei der Laufstreifen wenigstens zwei Rillen (7) umfasst, die sich wenigstens teilweise in Umfangsrichtung erstrecken, wobei jede Umfangsrille (7) von einem Rillenboden (71) und von zwei axial seitlichen Flächen (72) begrenzt wird, wobei der Laufstreifen wenigstens einen Profilblock (51) umfasst, der zwischen zwei Rillen (7) ausgebildet ist, wobei der Block eine auf einer im Wesentlichen dem Rillenboden (71) entsprechenden radialen Höhe gemessene axiale Breite L51 aufweist, **dadurch gekennzeichnet, dass**:
- wenigstens eine der seitlichen Flächen (72) hinterschnitten ist,
- das umlaufende Verstärkungselement (8-x) in Bezug auf die hinterschnittene seitliche Fläche (72) axial in einem Abstand "d" angeordnet ist, der zwischen 0 und 15 % der axialen Breite L51 des Profilblocks (51) beträgt, wobei es sich wenigstens radial von innen nach außen von einer radialen Höhe, die sich über der Abnutzungsgrenze befindet, bis zu einer radialen Höhe, die 5 % der Dicke "p" des Laufstreifens beträgt, erstreckt.

2. Reifen nach Anspruch 1, wobei das umlaufende Verstärkungselement (8-x) aus einer Kautschukmischung mit einem dynamischen Schermodul G* besteht, der mindestens zweimal so groß wie der dynamische Schermodul G* der im überwiegenden Anteil vorhandenen Kautschukmischung des Laufstreifens ist.

3. Reifen nach einem der Ansprüche 1 oder 2, wobei das umlaufende Verstärkungselement (8-x) die hinterschnittene axial seitliche Fläche (72) bildet.

4. Reifen nach einem der Ansprüche 1 bis 3, wobei die Kautschukmischung, aus der das Verstärkungselement (8-x) besteht, einen dynamischen Schermodul G* aufweist, der größer als 5 MPa ist.

5. Reifen nach Anspruch 4, wobei die Kautschukmischung, aus der das Verstärkungselement (8-x) besteht, einen dynamischen Schermodul G* aufweist, der größer als 10 MPa ist.

6. Reifen nach einem der Ansprüche 1 bis 5, wobei der dynamische Schermodul G* der Kautschukmischung, die an der Oberfläche des Bodens (71) erscheint, identisch mit dem dynamischen Schermodul G* der im überwiegenden Anteil vorhandenen Kautschukmischung des Laufstreifens ist.

7. Reifen nach einem der vorhergehenden Ansprüche, wobei das umlaufende Verstärkungselement (8) bündig mit der Kontaktseite des Laufstreifens ist, die dazu bestimmt ist, während des Rollens des Reifens mit der Fahrbahn in Kontakt zu kommen.

8. Reifen nach einem der vorhergehenden Ansprüche, welcher beiderseits wenigstens einer Rille (7) ein umlaufendes Verstärkungselement (8) aufweist.

9. Reifen nach Anspruch 8, wobei die Verstärkungselemente (8-9, 8-10, 8-11, 8-12, 8-13, 8-14) axial durch eine Zunge (80) verbunden sind, die von derselben Kautschukmischung gebildet wird, wie die Kautschukmischung, welche die umlaufenden Verstärkungselemente bildet.

## Claims

1. Tyre (1) comprising a tread (5) having a contact surface for coming into contact with the carriageway when the tyre is rolling, said tread comprising at least one circumferential reinforcing element (8-x), at least a portion of the meridian cross-section of which is in the shape of a triangle, the vertex of which is oriented radially towards the outside, said circumferential reinforcing element (8-x) consisting of a rubber mixture with a dynamic shear modulus G* measured at 60°C at 10 Hz and under an alternating shear stress of 0.7 MPa greater than the dynamic shear modulus G* of the main rubber mixture of the tread, said tread comprising at least two grooves (7) extending at least partially circumferentially, each circumferential groove (7) being delimited by a groove bottom (71) and axially by two side faces (72), said tread comprising at least one tread block (51) formed between two grooves (7), said block having an axial width L51 measured at a radial level corresponding substantially to the groove bottom (71), **characterized in that**:
- at least one of the side faces (72) is undercut,
- the circumferential reinforcing element (8-x) is arranged axially relative to said undercut side face (72) at a distance "d" of between 0 and 15% of the axial width L51 of the tread block (51), at least extending radially from the inside towards the outside from a radial level situated above the wear limit level and to a radial height equal to 5% of the thickness "p" of the tread.

2. Tyre according to Claim 1, in which the circumferential reinforcing element (8-x) consists of a rubber mixture with a dynamic shear modulus G* at least two times greater than the dynamic shear modulus G* of the main rubber mixture of the tread.

3. Tyre according to either one of Claims 1 and 2, in which the circumferential reinforcing element (8-x) forms said axially undercut side face (72).

4. Tyre according to any one of Claims 1 to 3, in which the rubber mixture forming the reinforcing element (8-x) has a dynamic shear modulus G* greater than 5 MPa.

5. Tyre according to Claim 4, in which the rubber mixture forming the reinforcing element (8-x) has a dynamic shear modulus G* greater than 10 MPa.

6. Tyre according to one of Claims 1 to 5, in which the dynamic shear modulus G* of the rubber mixture appearing on the surface of the bottom (71) is identical to the dynamic shear modulus G* of the main rubber mixture of the tread.

7. Tyre according to any one of the previous claims, in which the circumferential reinforcing element (8) is flush with the contact face of the tread for coming into contact with the carriageway when the tyre is rolling.

8. Tyre according to any one of the previous claims, including a circumferential reinforcing element (8) on either side of at least one groove (7).

9. Tyre according to Claim 8, in which said reinforcing elements (8-9, 8-10, 8-11, 8-12, 8-13, 8-14) are axially connected by a strip (80) formed from the same rubber mixture as the rubber mixture forming said circumferential reinforcing elements.
